# EUROPÄISCHE PATENTSCHRIFT

(11) **EP 1 092 598 B1**
(45) Veröffentlichungstag und Bekanntmachung des Hinweises auf die Patenterteilung: **22.12.2004**
(21) Anmeldenummer: 00117960.5
(22) Anmeldetag: 22.08.2000
(51) Int. Cl.: B60R 21/13

(54) **Haltevorrichtung für den Überrollkörper eines Überrollschutzsystems**
Retaining device for the rollbar of a rollover protection system
Dispositif de retenue de l'arceau d'un système de protection contre le retournement

(30) Priorität: 16.10.1999 DE 19949944
(43) Veröffentlichungstag der Anmeldung: 18.04.2001
(73) Patentinhaber: ISE Innomotive Systems Europe GmbH, 51702 Bergneustadt (DE)
(72) Erfinder: Latussek, Holger, 51702 Bergneustadt (DE)
(74) Vertreter: Fuchs Mehler Weiss & Fritzsche

(56) Entgegenhaltungen:
- EP-A- 0 752 344
- EP-A- 0 760 314
- EP-A- 0 916 552
- DE-A- 3 927 265
- US-A- 5 655 791
- US-A- 5 788 402

## Beschreibung

Die Erfindung bezieht sich auf eine Haltevorrichtung für den Überrollkörper eines Überrollschutzsystems für Kraftfahrzeuge, das ein am Überrollkörper befestigtes Halteglied aufweist, das in lösbarer mechanischer Wirkverbindung mit einem Auslöseglied eines sensorgesteuerten Auslösesystems steht.

Überrollschutzsysteme, wie sie insbesondere bei Cabriolets oder Sportwagen eingesetzt werden, weisen typischerweise einen geführten Überrollkörper, insbesondere Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung in eine obere, schützende und verriegelte Stellung bringbar ist.

Die Haltevorrichtung besitzt zu diesem Zweck typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, gebildet ist.

Nach einer Auslösung soll beim Zurückbringen des Überrollkörpers in die Ruhelage das Halteglied wieder selbsttätig in die Haltestellung bringbar sein.

Haltevorrichtungen der vorgenannten Art sind in zahlreichen Konstruktionsvarianten bekannt geworden. So zeigt die DE 43 14 538 C 1 eine sogenannte, mit dem Überrollbügel mechanisch beweglich verbundene Haltewippe als Halteglied, die einen Haltebolzen besitzt, der in Wirkverbindung mit einem hakenförmigen Auslöseglied steht, das durch Aktivieren des Auslösemagneten in eine den Haltebolzen freigebende Stellung bewegbar ist.

Trotz der drehbeweglich angelenkten Haltewippe und einer Einlaufschräge am Auslösesystem kann das bekannte System durch seine Starrheit nicht alle Fertigungstoleranzen und Fluchtungsfehler, zumindest nicht ohne das Auftreten von Querkräften, ausgleichen.

Das gleiche gilt für die Haltevorrichtung nach der gattungsgemässen EP 0 760 314 A 1. Diese weist eine mit dem Überrollbügel verbundene Haltestange auf, an der Vorsprünge zum Eingriff von Halteklauen vorgesehen sind, die schwenkbar am Fahrzeugaufbau gelagert sind. Die Halteklauen sind mittels des Crashmagneten aus der Verriegelungsstellung von den Vorsprüngen weg in eine Freigabestellung schwenkbar. Dabei sind die Halteklauen unter der Wirkung einer Feder in die Freigabestellung vorgespannt, wobei ein durch den Auslösemagneten bestätigbarer Stift die Halteklauen gegen das Verschwenken in die Freigabestellung blockiert.

Ferner ist durch die DE 197 50 457 A 1 eine Haltevorrichtung mit einem glockenförmigen Halteglied, in das Kugeln einrasten, bekannt geworden. Dieses System erfordert eine zeitaufwendige Justierung, um zu gewährleisten, daß das Halteglied nach einer Auslösung wieder selbsttätig in die Haltestellung bringbar ist. Zum anderen hat sich bei der Simulation von extremen Einbausituationen, d.h. bei einem sehr starken diagonalen Verspannen des Überrollbügels, gezeigt, daß die Kugeln trotz sorgfältiger Einstellung des Haltegliedes, nicht immer sämtlich selbsttätig beim Zurückdrücken des Überrollbügels in der Haltestelllung einrasten.

Der Erfindung liegt die Aufgabe zugrunde, die eingangs bezeichnete Haltevorrichtung so auszubilden, daß Fluchtfehler und Fertigungstoleranzen beim Wiedereinfahren des Überrollkörpers und damit des Haltegliedes in das Auslöseglied ausgeglichen werden können, ohne daß merkliche Querkräfte entstehen.

Die Lösung dieser Aufgabe gelingt gemäß der Erfindung ausgehend von einer Haltevorrichtung für den Überrollkörper eines Überrollschutzsystems für Kraftfahrzeuge, das ein am Überrollkörper befestigtes Halteglied aufweist, das in lösbarer mechanischer Wirkverbindung mit einem Auslöseglied eines sensorgesteuerten Auslösesystems steht, mit
- einer U-förmigen Haltegabel im Halteglied, die in den beiden Schenkeln in entsprechenden Bohrungen einen Haltebolzen für die Wirkverbindung aufnimmt und die mit ihrem Verbindungsschenkel über eine entsprechende Öffnung mittels eines Verbindungsbolzens mit dem Überrollkörper in Verbindung steht, und
- einer auf dem Verbindungsbolzen vorgespannt aufgenommenen Druckfeder, durch die eine elastische Wirkverbindung des Haltegliedes mit dem Auslöseglied herstellbar ist.

Die wesentlichen Vorteile der erfindungsgemäßen Haltevorrichtung sind zum einen die Fähigkeit, Fluchtfehler ausgleichen zu können, ohne daß Querkräfte entstehen, sowie die Möglichkeit, Fertigungstoleranzen auszugleichen.

Die Vorteile resultieren aus der Tatsache, daß die zum Verriegeln des Auslösegliedes benötigten Kräfte von einer Feder aufgebracht werden. Dadurch ist das System weder von einer genauen Höheneinstellung, noch einem genauen Fluchten der Achsen abhängig.

Für die Lagerung des Haltebolzens und die Anordnung der Druckfeder sind mehrere konstruktive Lösungen möglich.

Eine besonders einfache Konstruktion ist gegeben, wenn gemäß einer ersten Ausführungsform der Erfindung der Haltebolzen direkt in den Bohrungen der Schenkel der Haltegabel aufgenommen ist, und der Verbindungsbolzen einen unteren Gewindeabschnitt zur Befestigung in dem Verbindungsschenkel der Haltegabel, einen darüberliegenden zylindrischen Führungsabschnitt zur Aufnahme und Führung der Druckfeder in Form einer Schraubenfeder und einen weiteren Befestigungsabschnitt zur mechanischen Befestigung an einem Verbindungsglied des Überrollkörpers aufweist.

Diese Konstruktion wird noch weiter vereinfacht, wenn der Haltebolzen mittels Bundbuchsen, die verdrehgesichert und unverlierbar in die Bohrungen in den Schenkeln der Haltegabel eingeführt sind, in der Haltegabel drehbar gelagert ist. Dabei wird durch den drehbar gelagerten Haltebolzen die Auslöseenergie erheblich herabgesetzt.

Um die Winkelposition der Haltegabel konstant zu halten, ist die vorgenannte Haltevorrichtung zweckmäßig so weitergebildet, daß der Verbindungsbolzen oberhalb des Feder-Führungsabschnittes einen abgesetzten Vierkant und das Verbindungsglied eine entsprechende Vierkant-Öffnung zur verdrehsicheren Aufnahme der Haltegabel aufweist.

Um Fertigungstoleranzen und Fluchtungsfehler bei der Montage noch wirksamer ausgleichen zu können, ist die Vorrichtung zweckmäßig so ausgestaltet, daß der Verbindungsbolzen mittels einer Mutter, die einen gerundeten Bund aufweist, an dem Verbindungsschenkel der Haltegabel angeschraubt ist und daß die Haltegabel eine kugelförmige Prägung auf der Innenseite zur Ermöglichung einer Taumelbewegung sowie abgestellte Flankenabschnitte zur Vorzentrierung des Auslösegliedes besitzt.

Gemäß einer zweiten Ausführungsform der Erfindung ist die Haltevorrichtung zweckmäßig so ausgebildet, daß der Haltebolzen indirekt in der Haltegabel, die eine angeformte Verbindungslasche für die Verbindung mit dem Überrollbügel aufweist, über eine Wippe aufgenommen ist, die einen Führungsbolzen besitzt, daß die beiden Schenkel der Haltegabel jeweils ein Langloch zur Aufnahme des Führungsbolzens aufweisen, und daß zwischen der Wippe und der Innenseite des Verbindungsschenkels der Haltegabel, geführt durch einen Führungszapfen der Wippe, die Druckfeder in Form eines Tellerfederpaketes angeordnet ist.

Durch den an einer drehbeweglichen Wippe angedrehten Führungszapfen oder alternativ mit Preßsitz eingesetztem Führungsbolzen ist ein weiterer Freiheitsgrad für den Ausgleich von Fluchtungsfehlern gegeben.

Besondere Vorteile werden erzielt, wenn das Auslösesystem einen Auslösemagneten in Verbindung mit einem Doppelhebelsystem als Auslöseglied aufweist.

Anhand von zwei in den Zeichnungen dargestellten Ausführungsbeispielen wird die Erfindung näher beschrieben.

Es zeigen:
- Fig. 1: in einer Explosionsdarstellung die wesentlichen Bauteile einer ersten Ausführungsform des erfindungsgemäßen Haltegliedes,
- Fig. 2: in einer Längsschnittdarstellung der Ausführung nach Fig. 1 das Zusammenwirken des erfindungsgemäßen Haltegliedes mit einem bevorzugten Auslösesystem,
- Fig. 3: einen Ausschnitt im Bereich der Haltegabel gemäß einem Schnitt längs des Verbindungsschenkels der Haltegabel,
- Fig. 4: in einer perspektivischen Darstellung eine zweite Ausführungsform des erfindungsgemäßen Haltegliedes, und
- Fig. 5: die Ausführung nach Fig. 4 in einer Längsschnittdarstellung.

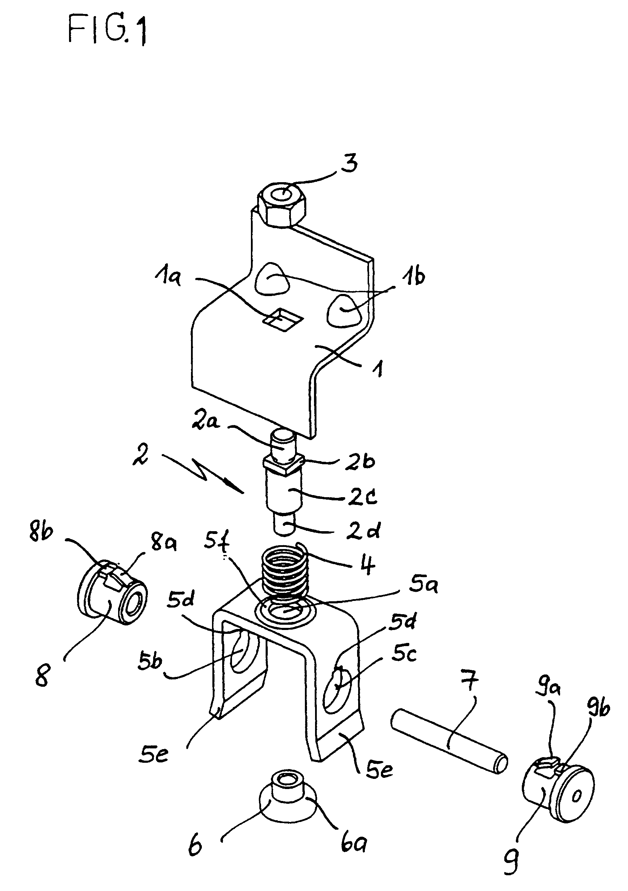

Die Figuren 1 bis 3 zeigen in verschiedenen Darstellungen eine erste Ausführungsform der Erfindung.

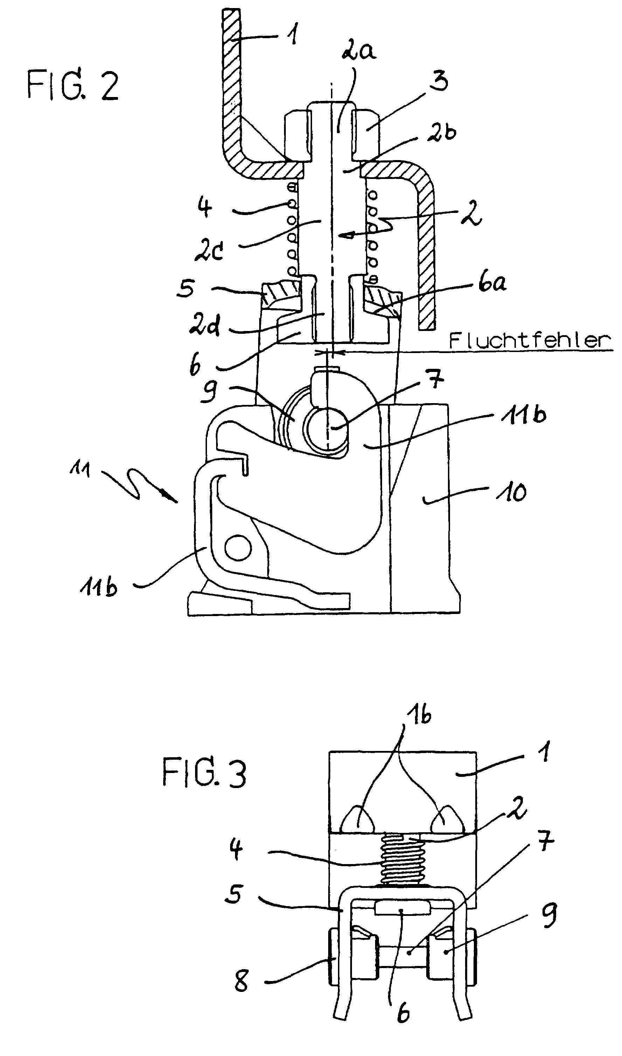

Die Figur 1 zeigt dabei in einer Explosionsdarstellung die einzelnen Komponenten eines Haltegliedes für die erfindungsgemäße Haltevorrichtung, das in mechanischem Wirkeingriff mit einem sensorgesteuerten Auslösesystem steht, wie es z.B. die Figur 2 zeigt.

Das Halteglied weist zunächst ein Winkelblech 1 auf, das mit dem nicht dargestellten Überrollkörper auf übliche Weise mechanisch verbunden ist. Je nach Form des Überrollkörpers, z.B. U-förmiger Bügel oder Profilkörper, ist auch ein anderes Verbindungselement denkbar. Zur Versteifung des Winkelbleches 1 sind Einprägungen 1b ausgeformt.

Es ist ferner ein Verbindungsbolzen 2 vorgesehen, der mittels einer Mutter 3 und einem zugehörigen Gewindeabschnitt 2a am Verbindungsbolzen mit dem Winkelblech 1 verschraubbar ist. Um den Verbindungsbolzen 2 in dem Winkelblech 1 verdrehsicher zu befestigen, weist er einen abgesetzten Vierkant 2b und das Winkelblech 1 eine entsprechende Vierkant-Öffnung 1a auf.

Der Verbindungsbolzen 2 weist ferner einen zylindrischen Abschnitt 2c auf, der eine Druckfeder in Form einer Schraubenfeder 4 aufnimmt. Mittels einer Öffnung 5a ist ferner an dem Verbindungsbolzen 2, die Druckfeder 4 leicht vorspannend, eine Haltegabel 5 aufgenommen, die mittels einer Mutter 6 und eines zugehörigen Gewindeabschnittes 2d des Verbindungsbolzens fest mit diesem verschraubt ist.

Diese Haltegabel 5 besitzt an den beiden Gabelschenkeln je eine Bohrung 5b und 5c, die, miteinander fluchtend, einen Haltebolzen 7 für den Wirkeingriff mit dem Auslösesystem aufnehmen. Der Haltebolzen 7 ist in zwei Bundbuchsen 8, 9 drehbar in der Haltegabel 5 gelagert. Dadurch kann die Auslöseenergie des Crashmagneten des Auslösesystems minimiert werden. Die Bundbuchsen besitzen dabei Schnappnasen 8a bzw. 9a gegen Verlust sowie jeweils einen Führungshöcker 8b bzw. 9b, der im Zusammenwirken mit einer entsprechenden Ausnehmung 5d in den Bohrungen 5b und 5c eine Verdrehsicherung der Bundbuchsen 8, 9 bewirkt.

Durch diese Anordnung kann der Haltebolzen 7 sehr einfach als Stift gestaltet werden. Es kann auf einen Bund am Haltebolzen und einen Einstich für ein Sicherungselement, z.B. eine Sicherungsscheibe, verzichtet werden.

Aus den vorstehenden Ausführungen in Verbindung mit den zugehörigen Figuren der Zeichnungen wird deutlich, daß das Winkelblech 1 (oder ein anders gestaltetes Verbindungselement) zwei Funktionen besitzt. Es dient einmal der Anbindung des Überrollkörpers an die Haltevorrichtung und übernimmt gleichzeitig die Funktion einer Sicherung gegen unbeabsichtigtes Verdrehen der Fanggabel.

Der Verbindungsbolzen 2 hat neben der Funktion, die Druckfeder 4 gegen Abknickung zu stützen (Funktion als Federführungsbolzen), noch die Aufgabe, einen Anschlag für die Haltegabel zu bilden. Durch den Vierkantansatz 2b ist eine Sicherung gegen Verschieben in positiver Z-Richtung gewährleistet.

Durch die Druckfeder 4 wird sichergestellt, daß durch sie elastisch die mechanische Wirkverbindung zwischen dem Haltebolzen 7 und dem zugehörigen Auslöseglied im Auslösesystem, das noch näher beschrieben wird, herstellbar ist. Die Druckfeder 4 bringt die für die mechanische Wirkverbindung notwendigen Kräfte auf. Dadurch ist das System weder von einer genauen Höheneinstellung (zwischen Haltebolzen und Auslöseglied) noch von einem genauen Fluchten der Achsen, wie aus Figur 2 ersichtlich, abhängig. Des weiteren wird mit der Druckfeder 4 erreicht, daß die Haltegabel in "Normalstellung" gehalten wird. Eine weitere Funktion ist die Möglichkeit, Fertigungstoleranzen auszugleichen. Zu diesem Zweck besitzt die Haltegabel eine kugelförmige Prägung 5f auf der Innenseite, um eine Taumelbewegung zu ermöglichen sowie abgestellte Flankenabschnitte 5e zur Vorzentrierung des Auslösegliedes beim Wiedereinfahren des Systems.

Die Mutter 6, vorzugsweise eine Zweilochmutter, besitzt einen gerundeten Bund 6a, auf dem die Haltegabel eine Bewegung in Z-Richtung vollziehen kann. Durch diese Funktion können ebenfalls Fertigungstoleranzen ohne zusätzliche mechanische Belastungen der Komponenten der Haltevorrichtung ausgeglichen werden.

Das Auslösesystem, das schematisch in Figur 2 dargestellt ist, besteht vorzugsweise aus einem Crashmagneten 10 und einem davon betätigbaren Doppelhebelsystem 11 als Auslöseglied für den Wirkeingriff mit dem Haltebolzen 7. Bei Betätigung des Crashmagneten 10 wird der den Haltebolzen 7 verriegelnde Hebel 11a (aufgrund eines Verschwenkens des Hebels 11b) im Uhrzeigersinn verschwenkt und gibt den Haltebolzen 7 und damit den Überrollkörper frei, der aufgrund der nicht dargestellten Antriebsfeder in seine obere Stützlage schnellt.

Das vorgenannte Auslösesystem mit Doppelhebel wird im Einzelnen in der DE 197 50 693 A 1 beschrieben. Auf den Offenbarungsinhalt dieser Schrift wird hiermit Bezug genommen.

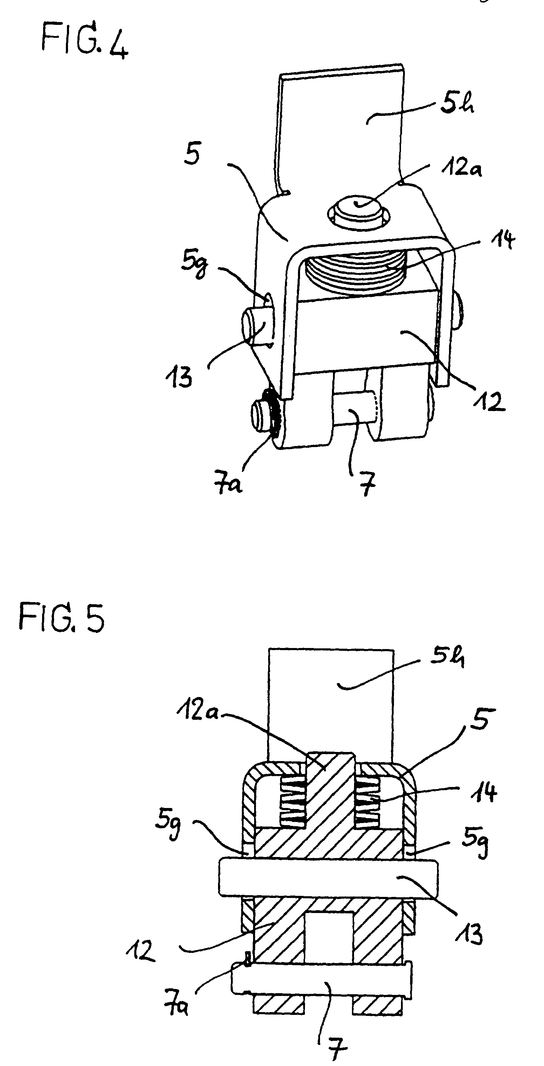

Die Figuren 4 und 5 zeigen in einer vereinfachten perspektivischen und einer schematischen Längsschnittdarstellung eine zweite Ausführungsform der Erfindung, wobei Gleichteile zur Figur 1 bzw. funktionsgleiche Teile mit derselben Bezugsziffer versehen sind.

Im Gegensatz zu der ersten Ausführung ist der Haltebolzen 7 nicht unmittelbar in der Haltegabel 5 in Bundbuchsen gelagert, sondern in einer Wippe 12, die beispielsweise aus einem Al-Strangpreßprofil hergestellt werden kann, fixiert mit einem Sicherungsring 7a. In diese Wippe 12 ist mit Preßsitz ein Führungsbolzen 13 eingesetzt, der in Langlöchern 5g geführt ist. Zwischen dem Verbindungsschenkel der Haltegabel 5 und der Wippe 12 ist ein Paket von Tellerfedern 14 auf einen Führungszapfen 12a der Wippe 12 angeordnet. Dadurch ist die Wippe 12 gegen die Vorspannkraft der Tellerfedern 14 in der Haltegabel 5 geführt, wobei die Langlöcher 5g für eine Begrenzung der Bewegung in Z-Richtung dienen. Anstelle eines Winkelbleches l in Figur 1 ist die Haltegabel 5 mittels einer winklig angeformten Lasche 5h mit dem Überrollbügel verbindbar.

## Patentansprüche

1. Haltevorrichtung für den Überrollkörper eines Überrollschutzsystems für Kraftfahrzeuge, das ein am Überrollkörper befestigtes Halteglied aufweist, das in lösbarer mechanischer Wirkverbindung mit einem Auslöseglied eines sensorgesteuerten Auslösesystems steht, **gekennzeichnet durch**,
- einer U-förmigen Haltegabel (5) im Halteglied, die in den beiden Schenkeln in entsprechenden Bohrungen (5b, 5c) einen Haltebolzen (7) für die Wirkverbindung aufnimmt und die mit ihrem Verbindungsschenkel mit dem Überrollkörper in Verbindung steht, und
- einer der Haltegabel vorgespannt zugeordneter Druckfeder (14), **durch** die eine elastische Wirkverbindung des Haltegliedes mit dem Auslöseglied herstellbar ist.

2. Haltevorrichtung nach Anspruch 1, **dadurch gekennzeichnet, daß** der Haltebolzen (7) direkt in den Bohrungen (5b, 5c) der Schenkel der Haltegabel aufgenommen ist, und diese über eine entsprechende Öffnung (5a) mittels eines Verbindungsbolzens (2) mit dem Überrollbügel in Verbindung steht, und daß der Verbindungsbolzen (2) einen unteren Gewindeabschnitt (2d) zur Befestigung an dem Verbindungsschenkel der Haltegabel (5), einen darüberliegenden zylindrischen Führungsabschnitt (2c) zur Aufnahme und Führung der Druckfeder (4) in Form einer Schraubenfeder und einen weiteren Befestigungsabschnitt (2a) zur mechanischen Befestigung an einem Verbindungsglied (1) des Überrollkörpers aufweist.

3. Haltevorrichtung nach Anspruch 2, **dadurch gekennzeichnet, daß** der Haltebolzen (7) mittels Bundbuchsen (8, 9), die verdrehgesichert und unverlierbar in die Bohrungen (5b, 5c) in den Schenkeln der Haltegabel (5) eingeführt sind, in der Haltegabel (7) drehbar gelagert ist.

4. Haltevorrichtung nach Anspruch 2 oder 3, **dadurch gekennzeichnet, daß** der Verbindungsbolzen (2) oberhalb des Feder-Führungsabschnittes (2c) einen abgesetzten Vierkant (2b) und das Verbindungsglied (1) eine entsprechende Vierkant-Öffnung (1a) zur verdrehsicheren Aufnahme der Haltegabel (7) aufweist.

5. Haltevorrichtung nach einem der Ansprüche 2 bis 4, **dadurch gekennzeichnet, daß** der Verbindungsbolzen (2) mittels einer Mutter (6), die einen gerundeten Bund (6a) aufweist, an dem Verbindungsschenkel der Haltegabel (5) angeschraubt ist.

6. Haltevorrichtung nach einem der Ansprüche 2 bis 5, **dadurch gekennzeichnet, daß** die Haltegabel (5) eine kugelförmige Prägung auf der Innenseite zur Ermöglichung einer Taumelbewegung sowie abgestellte Flankenabschnitte (5e) zur Vorzentrierung des Auslösegliedes (11 b) besitzt.

7. Haltevorrichtung nach Anspruch 1, **dadurch gekennzeichnet, daß** der Haltebolzen (7) indirekt in der Haltegabel (5), die eine angeformte Verbindungslasche (5h) für die Verbindung mit dem Überrollbügel aufweist, über eine Wippe (12) aufgenommen ist, die einen Führungsbolzen (13) besitzt, daß die beiden Schenkel der Haltegabel (5) jeweils ein Langloch (5g) zur Aufnahme des Führungsbolzens (13) aufweisen, und daß zwischen der Wippe (12) und der Innenseite des Verbindungsschenkels der Haltegabel (5), geführt durch einen Führungszapfen der Wippe (12), die Druckfeder in Form eines Tellerfederpaketes (14) angeordnet ist.

8. Haltevorrichtung nach einem der Ansprüche 1 bis 7, **dadurch gekennzeichnet, daß** das Auslösesystem einen Auslösemagneten (10) in Verbindung mit einem Doppelhebelsystem (11) als Auslöseglied aufweist.

## Claims

1. A retaining device for the roll-over body of a roll-over protection system for motor vehicles, having a retaining element which is fastened to the roll-over body and is in disengageable mechanical operative connection with a release element of a sensor-controlled release system, **characterised by**
- a U-shaped retaining fork (5) in the retaining element, which fork receives a retaining pin (7) in the two limbs in corresponding bores (5b, 5c) for the purpose of the operative connection and which is connected by its connecting limb to the roll-over body, and
- a compression spring (14) which is associated in pre-loaded manner with the retaining fork and by means of which a resilient operative connection of the retaining element to the release element can be made.

2. A retaining device according to claim 1, **characterised in that** the retaining pin (7) is received directly in the bores (5b, 5c) of the limbs of the retaining fork, and the latter is connected to the roll bar *via* a corresponding aperture (5a) by means of a connecting pin (2), and the connecting pin (2) has a lower, threaded portion (2d) for fastening to the connecting limb of the retaining fork (5), a cylindrical guide portion (2c), above the lower portion, for receiving and guiding the compression spring (4) in the form of a helical spring, and a further fastening portion (2a) for mechanical fastening to a connecting element (1) of the roll-over body.

3. A retaining device according to claim 2, **characterised in that** the retaining pin (7) is rotatably mounted in the retaining fork (7) by means of collar bushes (8, 9) which are inserted into the bores (5b, 5c) in the limbs of the retaining fork (5) in a captive and rotationally fixed manner.

4. A retaining device according to claim 2 or claim 3, **characterised in that** the connecting pin (2) has a shouldered square portion (2b) above the spring-guiding portion (2c), and the connecting element (1) has a corresponding square aperture (1a) for receiving the retaining fork (7) in a rotationally fixed manner.

5. A retaining device according to any one of claims 2 to 4, **characterised in that** the connecting pin (2) is screwed to the connecting limb of the retaining fork (5) by means of a nut (6) having a rounded collar (6a).

6. A retaining device according to any one of claims 2 to 5, **characterised in that** the retaining fork (5) has a spherical concavity on the inside to enable a wobbling motion and turned-out flank portions (5e) for pre-centring of the release element (11b).

7. A retaining device according to claim 1, **characterised in that** the retaining pin (7) is received in a retaining fork (5) that has an integrally formed connecting lug (5h) for connection to the roll bar, indirectly *via* a rocker (12) having a guide pin (13), the two limbs of the retaining fork (5) each have an elongate hole (5g) for receiving the guide pin (13), and, between the rocker (12) and the inside of the connecting limb of the retaining fork (5) and guided by a guide pin of the rocker (12), the compression spring is arranged in the form of a cup spring assembly (14).

8. A retaining device according to any one of claims 1 to 7, **characterised in that** the release system has a release magnet (10) in combination with a double lever system (11) as the release element.

## Revendications

1. Dispositif de retenue de l'arceau de sécurité d'un système de protection contre le retournement pour des véhicules automobiles, qui comporte un organe de retenue, qui est fixé contre l'arceau de sécurité et qui est relié mécaniquement de manière amovible en liaison active avec un organe de déclenchement d'un système de déclenchement commandé par capteur, **caractérisé par**
- un étrier de retenue (5) en forme de U dans l'organe de retenue, lequel reçoit dans les deux branches, dans des forures (5b, 5c) correspondantes, un boulon de retenue (7) pour la liaison active et lequel est relié à l'arceau de sécurité par ses deux branches, et
- un ressort de compression (14), qui est associé en précontrainte à l'étrier de retenue et qui permet d'établir une liaison active élastique entre l'organe de retenue et l'organe de déclenchement.

2. Dispositif de retenue selon la revendication 1, **caractérisé en ce que** le boulon de retenue (7) est reçu directement dans les forures (5b, 5c) des branches de l'étrier de retenue, et celui-ci est relié à l'arceau de sécurité par l'intermédiaire d'un orifice (5a) correspondant au moyen d'un boulon d'assemblage (2), et **en ce que** le boulon d'assemblage (2) comporte une partie filetée inférieure (2d) pour la fixation contre la branche d'assemblage de l'étrier de retenue (5), une partie de guidage (2c) cylindrique, disposée au-dessus de ladite partie filetée et destinée à recevoir et à guider le ressort de compression (4) formé par un ressort à boudin, et une autre partie de fixation (2a) pour la fixation mécanique contre l'organe d'assemblage (1) de l'arceau de sécurité.

3. Dispositif de retenue selon la revendication 2, **caractérisé en ce que** le boulon de retenue (7) est logé rotatif dans l'étrier de retenue (5) au moyen de douilles à collerette (8, 9) qui sont introduites de manière immobile en rotation et de manière imperdable dans les forures (5b, 5c) dans les branches de l'étrier de retenue (5).

4. Dispositif de retenue selon la revendication 2 ou 3, **caractérisé en ce que** le boulon d'assemblage (2) comporte au-dessus de la partie de guidage du ressort (2c) un collet carré (2b) décalé et l'organe d'assemblage (1) comporte un orifice carré (1a) correspondant destiné à recevoir de manière immobile en rotation l'étrier de retenue (5).

5. Dispositif de retenue selon l'une quelconque des revendications 2 à 4, **caractérisé en ce que** le boulon d'assemblage (2) est fixé par vissage contre la branche d'assemblage de l'étrier de retenue (5) au moyen d'un écrou (6), qui comporte une collerette (6a) ronde.

6. Dispositif de retenue selon l'une quelconque des revendications 2 à 5, **caractérisé en ce que** l'étrier de retenue (5) possède une empreinte de forme sphérique sur la face intérieure pour permettre un mouvement de culbute, ainsi que des parties de flanc (5e) en appui pour le pré-centrage de l'organe de déclenchement (11b).

7. Dispositif de retenue selon la revendication 1, **caractérisé en ce que** le boulon de retenue (7) est reçu indirectement dans l'étrier de retenue (5), qui comporte une patte d'assemblage (5h) formée contre l'étrier pour l'assemblage avec l'arceau de sécurité, par l'intermédiaire d'une bascule (12), qui comporte un boulon de guidage (13), **en ce que** les deux branches de l'étrier de retenue (5) comportent chacune un trou oblong (5g) destiné à recevoir le boulon de guidage (13), et **en ce que** le ressort de compression, formé par un paquet de ressorts Belleville (14) est agencé entre la bascule (12) et la face intérieure de la branche d'assemblage de l'étrier de retenue (5) en étant guidé par un téton de guidage de la bascule (12).

8. Dispositif de retenue selon l'une quelconque des revendications 1 à 7, **caractérisé en ce que** le système de déclenchement comporte un aimant de déclenchement (10) relié à un système à double levier (11) formant l'organe de déclenchement.
